# EUROPÄISCHE PATENTSCHRIFT

(11) **EP 2 512 905 B1**
(45) Veröffentlichungstag und Bekanntmachung des Hinweises auf die Patenterteilung: **01.10.2014**
(21) Anmeldenummer: 10790772.7
(22) Anmeldetag: 13.12.2010
(51) Int. Cl.: B62D 53/08, B62D 63/06, B62D 53/04

(54) **TRANSPORTFAHRZEUG MIT INTEGRIERTEM ANHÄNGER**
TRANSPORT VEHICLE COMPRISING INTEGRATED TRAILER
VÉHICULE DE TRANSPORT À REMORQUE INTÉGRÉE

(30) Priorität: 14.12.2009 DE 202009017004 U
(43) Veröffentlichungstag der Anmeldung: 24.10.2012
(73) Patentinhaber: HMT Technische Vertriebsgesellschaft mbH, 65205 Wiesbaden (DE); Kammel, Wilfried, 99880 Fröttstädt (DE)
(72) Erfinder: KAMMEL, Wilfried, 99880 Fröttstädt (DE)
(74) Vertreter: WSL Patentanwälte Partnerschaft mbB
(86) Internationale Anmeldenummer: PCT/EP2010/069454
(87) Internationale Veröffentlichungsnummer: WO 2011/082960

(56) Entgegenhaltungen:
- EP-A1- 1 177 971
- DE-A1- 10 312 302
- US-A- 5 449 191
- US-A1- 2010 301 584

## Beschreibung

Die vorliegende Erfindung betrifft ein Transportfahrzeug, welches ein Zugfahrzeug, das einen Fahrzeugrahmen und mindestens zwei Achsen umfasst, und einen integrierten Anhänger, der einen offenen oder geschlossenen Aufbau und wenigstens eine Achse umfasst, aufweist.

Als Transportfahrzeuge zum Lastentransport können im Allgemein sowohl Personenkraftwagen (PKW) als auch Lastkraftwagen (LKW) genutzt werden. Dabei müssen allerdings je nach Fahrzeugtyp unterschiedlichen gesetzliche Rahmenbestimmungen beachtet werden. Wichtig beim Transport von Lasten sind etwa die gesetzlich zulässigen, ebenso wie die vom Hersteller angegebenen Höchstgrenzen für das Gewicht der einzelnen Fahrzeugkomponenten eines Fahrzeugzugs sowie für das Gesamtgewicht desselben. So kann sich für den Transport einer Fracht mit hohem Gewicht das Problem stellen, dass das zur Verfügung stehende Transportfahrzeug nicht für die zu transportierende Last zugelassen ist. Häufig kann dieses Problem durch den Einsatz eines Anhängers gelöst werden. Das verwendete Zugfahrzeug kann dabei sowohl ein PKW als auch LKW sein. Im LKW-Bereich sind zwei Konstruktionskonzepte verbreitet: Zum einen das Konzept des Lastzugs, der einen LKW mit Aufbau als Zugmaschine und einen Anhänger umfasst, sowie zum anderen das Konzept eines Sattelzugs, das eine Sattelzugmaschine zusammen mit einem Sattelauflieger umfasst. Beide Fälle haben gemeinsam, dass der Anhänger bzw. Sattelauflieger lösbar mit dem LKW mit Aufbau bzw. der Sattelzugmaschine verbunden ist und somit je nach Bedarf an- und abgehängt werden kann. Zu beachten ist, dass ein LKW mit Aufbau im Gegensatz zu einer Sattelzugmaschine auch ohne Anhänger zum Gütertransport geeignet ist.

Abhängig von dem als Zugfahrzeug verwendeten Fahrzeugtyp sowie der verwendeten Fahrzeugkombination werden den gesetzlichen Vorschriften gemäß unterschiedliche Arten von Fahrerlaubnissen zum Führen des jeweiligen Fahrzeugs bzw. der jeweiligen Fahrzeugkombination benötigt. Der Erwerb dieser Fahrerlaubnisse ist unter Umständen mit einem nicht unerheblichen Zeit- und Kostenaufwand verbunden. Hinzu kommt, dass gerade spezielle Fahrerlaubnisse häufig zeitlich befristet sind und somit in regelmäßigen Abständen erneuert werden müssen, was einen zusätzlichen Zeit- und Kostenaufwand bedeutet. Möchte man also eine bestimmte Fracht transportieren, so muss man neben einem geeigneten Transportfahrzeug auch für einen Fahrer mit geeigneter Fahrerlaubnis Sorge tragen, was einen deutlichen Zusatzaufwand zur Folge haben kann.

In der Bundesrepublik Deutschland (BRD) berechtigt beispielsweise eine Fahrerlaubnis der Klasse B, d. h. ein PKW-Führerschein, zum Führen von mehrspurigen Kraftfahrzeugen bis 3,5 t zulässiger Gesamtmasse. Möchte man die zur Verfügung stehende Nutzlast, d. h. die Last, die auf eine Fahrzeugkombination aufgeladen werden darf, erhöhen, kann man beispielsweise einen Anhänger an einen PKW anhängen. Steigt die Gesamtmasse der Fahrzeugkombination dabei über 3,5 t, so benötigt der Fahrer eine Fahrerlaubnis der Klasse BE, d. h. einen PKW-Führerschein mit Anhängerzusatz. Alternativ kann man auf einen Lastzug mit einem LKW zurückgreifen, was aber den Besitz einer Fahrerlaubnis der C-Klassen, d. h. einen LKW-Führerschein, voraussetzt.

Des weiteren ergeben sich abhängig vom gewählten Transportfahrzeug bzw. der gewählten Transportfahrzeugkombination Beschränkungen hinsichtlich der zulässigen Höchstgeschwindigkeit. So gilt in der BRD beispielsweise von Rechts wegen keine fahrzeugspezifische Höchstgeschwindigkeit für PKW. Allerdings beträgt die maximal zulässige Geschwindigkeit für PKW mit Anhänger 80 km/h, in speziellen Fällen 100 km/h. Für LKW gilt grundsätzlich, dass maximal 80 km/h zulässig sind. Ebenso tragen unter Umständen gesetzliche Bestimmungen in Bezug auf vorgeschriebene Lenk- und Ruhezeiten für die Fahrer dazu bei, dass die für den Frachttransport benötigte Zeit deutlich ansteigt. All diese gesetzliche Rahmenbedingungen können zu längeren Transportzeiten führen, die sich ihrerseits in höheren Transportkosten niederschlagen.

Unter dem Gesichtspunkt der Wirtschaftlichkeit kann es daher in vielen Fällen gerade für kleinere und mittlere Firmen unrentabel sein, Transportfahrzeuge, die für den Transport von Frachtgütern mit hohem Gewicht ausgelegt sind, anzuschaffen und Fahrer mit entsprechenden Fahrerlaubnissen anzustellen, wenn solche Transporte nur unregelmäßig oder selten notwendig sind.

Häufig finden daher Fahrzeugkonzepte Verwendung, bei denen die Möglichkeit besteht, je nach Bedarf einen zusätzlichen Anhänger an- bzw. abzuhängen. Wird dieser allerdings nicht gebraucht, so benötigt man einen Abstellplatz, auf dem der Anhänger bis zum nächsten Einsatz geparkt wird. Dadurch entsteht ein zusätzlicher Platzbedarf und die oben beschriebene Problematik der gesetzlichen Einschränkungen wird nicht gelöst.

Aus diesen Gründen wäre ein kompaktes Fahrzeugkonzept vorteilhaft, das die Möglichkeit einer flexiblen Anpassung an die Nutzlasterfordernisse unterschiedlicher Frachtgüter zulässt. Insbesondere wäre es von Vorteil, wenn es dabei nur geringe bis keine zusätzlichen Erfordernisse an die benötigte Fahrerlaubnis des Fahrers stellt. Auch im Hinblick auf die zulässige Höchstgeschwindigkeit sowie mögliche gesetzlich vorgeschriebene Lenk- und Ruhezeiten wäre es von Vorteil, wenn diese die Transportzeiten nur gering bis gar nicht beeinträchtigen würden.

Die US 5,449,191 A beschreibt eine Gleitvorrichtung für eine Sattelkupplung, die eine auf dem Rahmen einer Zugmaschine befestigte Deckplatte umfasst, mit einem Paar gezahnter Führungsschienen auf der oberen Fläche, wobei eine herkömmliche Sattelkupplung mit Sockel und Sattelplatte wahlweise entlang der gezahnten Schienen bewegbar ist.

In der EP 1 177 971 A1 wird eine verfahrbare Konstruktion für Gütertransport und dergleichen beschrieben, die ein verfahrbares Element umfasst, das mindestens aus einem Gestell geformt ist, das durch mindestens zwei mit Rädern versehene Achsen getragen wird, wobei dieses Gestell einerseits erste Mittel umfasst, wodurch es durch einen Benutzer lösbar unter einem Wagenrahmen angebracht werden kann, und andererseits zweite Mittel umfasst, wodurch ein Auflieger mit seinem vorderen Ende scharnierbeweglich an dem besagten Gestellt befestigt werden kann.

Ausgehend vom beschriebenen Stand der Technik liegt der vorgelegten Erfindung daher die Aufgabe zugrunde, ein kompaktes Transportfahrzeug bereitzustellen, das im Hinblick auf seine zulässige Nutzlast, seine zulässige Höchstgeschwindigkeit und seine Fahrerlaubnisanforderungen flexibel an die Erfordernisse der zu transportierenden Fracht angepasst werden kann. Erfindungsgemäß wird diese Aufgabe dadurch gelöst, dass das hier beschriebene Transportfahrzeug einen integrierten Anhänger aufweist, der über eine bewegliche Drehkranzverbindung mit dem Zugfahrzeug verbunden ist, wobei die bewegliche Drehkranzverbindung zusammen mit dem integrierten Anhänger aus einer ersten Position, in der sich der Aufbau des integrierten Anhängers zu einem überwiegenden Teil über dem Fahrzeugrahmen befindet und der integrierte Anhänger über eine lösbare Verriegelung in dieser ersten Position verriegelt gehalten wird, so dass der integrierte Anhänger an einem Verschwenken um die bewegliche Drehkranzverbindung ebenso wie an einem Verschieben in Längsrichtung des Zugfahrzeugs gehindert wird, in eine zweite Position, in der sich der Aufbau des integrierten Anhängers zu einem überwiegenden Teil nicht über dem Fahrzeugrahmen befindet und die lösbare Verriegelung entriegelt ist, so dass der integrierte Anhänger um die bewegliche Drehkranzverbindung verschwenkbar ist, auf dem Zugfahrzeug in dessen Längsrichtung verschiebbar ist.

Unter einer beweglichen Drehkranzverbindung ist eine Verbindung zwischen dem Zugfahrzeug und dem integrierten Anhänger zu verstehen, die um die Vertikalachse des Transportfahrzeugs drehbar ist und somit ein Verschwenken des integrierten Anhängers um die Vertikalachse zulässt. Ist das Transportfahrzeug in einer Ausgangskonfiguration, in der sich der Aufbau des integrierten Anhängers zu einem überwiegenden Teil über dem Fahrzeugrahmen des Zugfahrzeugs befindet, erweist es sich als vorteilhaft den integrierten Anhänger in dieser ersten Position über eine lösbare Verriegelung zu arretieren. Ist diese lösbare Verriegelung in der ersten Position des integrierten Anhängers verriegelt, so verhindert sie ein Verschwenken des integrierten Anhängers um die bewegliche Drehkranzverbindung und somit negative Auswirkungen auf die Fahreigenschaften des Transportfahrzeugs. Des weiteren sorgt sie dafür, dass sich die bewegliche Drehkranzverbindung und mit ihr der integrierte Anhänger nicht während der Fahrt in Längsrichtung des Zugfahrzeugs verschieben. Das Transportfahrzeug bildet somit eine kompakte Transporteinheit. Diese ist bei einer entsprechenden konzeptioneller Auslegung nur geringen gesetzlichen Einschränkungen im Hinblick auf die zulässige Höchstgeschwindigkeit sowie die erforderliche Fahrerlaubnis unterworfen. So ist es beispielsweise mit einer Fahrerlaubnis der Klasse B und einem Transportfahrzeug dieser Art möglich, bei einem Eigengewicht von etwa 2,3 t des Transportfahrzeugs eine Nutzlast von maximal etwa 1,2 t zu transportieren. Zu beachten ist, dass von Rechts wegen in diesem Fall keine fahrzeugspezifische Höchstgeschwindigkeit gilt.

Wie man am o. g. Beispiel allerdings sehen kann ergeben sich deutliche Einschränkungen an die zulässige Nutzlast, wenn sich der integrierte Anhänger in der ersten Position befindet. Wird das Transportfahrzeug in eine zweite Konfiguration gebracht, in der sich der integrierte Anhänger zu einem überwiegenden Teil nicht über dem Fahrzeugrahmen des Zugfahrzeugs befindet und die lösbare Verriegelung entriegelt ist, so ist der integrierte Anhänger um die bewegliche Drehkranzverbindung schwenkbar. Daher entspricht das Transportfahrzeug mit dem integrierten Anhänger in dieser zweiten Position einem Lastzug mit Zugmaschine und Anhänger. Da der integrierte Anhänger in dieser zweiten Position nachgeführt wird, hat seine Verschwenkbarkeit um die bewegliche Drehkranzverbindung keine negativen Auswirkungen auf die Fahreigenschaften des Transportfahrzeugs. Vielmehr werden die Fahreigenschaften deutlich verbessert, da es das Verschwenken des integrierten Anhängers erlaubt, das Transportfahrzeug auch um enge Kurven sicher zu steuern. Es erweist sich als vorteilhaft, wenn die bewegliche Drehkranzverbindung in der zweiten Position des integrierten Anhängers so arretierbar ist, dass sie ein Verschieben des integrierten Anhängers während der Fahrt, beispielsweise beim Abbremsen des Transportfahrzeugs, verhindert. Eine solche Fahrzeugkombination ist im Allgemeinen für eine deutlich höhere Nutzlast zugelassen ist. Die höhere Nutzlast führt aber zu Einschränkungen an die zulässige Höchstgeschwindigkeit sowie zu zusätzlichen Anforderungen an die benötigte Fahrerlaubnis. Fällt das Transportfahrzeug dabei jedoch aufgrund einer entsprechenden konzeptionellen Auslegung nicht unter die gesetzlichen Vorschriften für LKW, kann es hohe Nutzlasten deutlich schneller und mit weniger Anforderungen an den Fahrer, insbesondere im Hinblick auf die benötigte Fahrerlaubnis sowie zulässige Lenk- und Ruhezeiten, transportieren als ein LKW. So beträgt die maximale zulässige Höchstgeschwindigkeit für das hier vorgestellte Transportfahrzeug beispielweise 100 km/h im Falle eines Eigengewichts von etwa 1,9 t für das Zugfahrzeugs und etwa 0,4 t für den integrierten Anhänger bei einer Anhängelast von etwa 2,8 t. Die zulässige maximale Nutzlast beträgt dann etwa 4 t und es wird zum Führen des Transportfahrzeugs lediglich eine Fahrerlaubnis der Klasse BE benötigt.

Ein derartiges Transportfahrzeug kann gerade für Firmen von hohem Interesse sein, die im Bezug auf Abmessung und Gewicht höchst unterschiedliche Güter zu transportieren haben. Ebenso kann ein solches Transportfahrzeug für Autovermietungen attraktiv sein, da für unterschiedliche Kundenwünsche nur ein einziges Transportfahrzeug benötigt wird, welches in der Anschaffung grundsätzlich günstiger ist als der Erwerb zweier oder mehr unterschiedlicher Fahrzeuge.

Je nach Art der zu transportierenden Fracht, kann ein offener oder ein geschlossener Aufbau des integrierter Anhängers vorteilhafter sein. Ein Aufbau mit nach oben offener Ladefläche bietet etwa den Vorteil, dass von allen Seiten schnell und direkt auf die Fracht zugegriffen werden kann. Dies ist insbesondere vorteilhaft beim Be- bzw. Entladen von schüttfähigen und/oder rieselfähigen Gütern wie beispielsweise Kies oder Sand. Im Falle solcher schüttfähigen und/oder rieselfähigen Güter ist es außerdem vorteilhaft, wenn der Aufbau einen Kippmechanismus umfasst, durch den die Ladefläche schräg gestellt werden kann. Das Schrägstellen der Ladefläche beim Entladen führt zu einem beabsichtigten Herunterrutschen des Transportguts. Besteht allerdings die Gefahr, dass die Fracht leicht zu Schaden kommen kann, so empfiehlt sich ein allseitig geschlossener Aufbau, der einen nach allen Seiten geschützten Laderaum umfasst. Mit Hilfe eines solchen Aufbaus bleibt die Fracht insbesondere gegenüber Witterungseinflüsse abgeschirmt. Des weiteren lässt sich die Fracht in diesem Fall aufgrund der allseitig vorhandenen Stützflächen leicht sichern.

Das Zugfahrzeug kann ebenfalls einen Aufbau aufweisen. Auch in diesem Fall kann abhängig vom zu transportierenden Gut sowohl ein offener, als auch ein geschlossener Aufbau vorteilhaft sein. Des weiteren kann es von Vorteil sein, dass der Aufbau des Zugfahrzeugs den Aufbau des integrierten Anhängers in der ersten Position des integrierten Anhängers teilweise umgreift, so dass die Ladeflächen beider Aufbauten eine gemeinsame durchgängige Ladefläche bilden. Ebenso ist der umgekehrte Fall denkbar, indem der Aufbau des integrierten Anhängers den Aufbau des Zugfahrzeugs umgreift. Vorteilhaft ist eine Fahrzeugkonstruktion, die ein stufenweises Verschieben und Arretieren des integrierten Anhängers in Längsrichtung des Zugfahrzeugs ermöglicht. Bei einem solchen Transportfahrzeug kann die gemeinsame durchgängige Ladefläche der Länge der Frachtgüter flexibel anpassbar werden. Für ein solches stufenweises Verschieben der beweglichen Drehkranzverbindung und mit ihr des integrierten Anhängers muss für jede Zwischenposition zwischen der ersten und der zweiten Position des integrierten Anhängers eine zugehörige lösbare Verriegelung vorgesehen sein. Soll der integrierte Anhänger in einer bestimmten Zwischenposition arretiert sein, so muss die zugehörige Verriegelung verriegelt sein. Dadurch verhindert diese Verriegelung ein Verschwenken des integrierten Anhängers um die bewegliche Drehkranzverbindung sowie ein Verschieben desselben in Längsrichtung des Zugfahrzeugs während der Fahrt. Ist die.zu transportierende Fracht beispielsweise länger als der Aufbau des integrierten Anhängers, so kann durch ein Verschieben des integrierten Anhängers entlang der Längsachse des Zugfahrzeugs nach hinten die Gesamtladefläche derart vergrößert werden, dass die Fracht sicher verstaut und transportiert werden kann.

Befindet sich der integrierte Anhänger in der zweiten Position, so ist es notwendig, dass dieser um die bewegliche Drehkranzverbindung schwenkbar ist, so dass das Transportfahrzeug problemlos auch um enge Kurven gesteuert werden kann. Zu diesem Zweck müssen die Aufbauten des Zugfahrzeugs und des integrierten Anhängers zueinander schwenkbar sein. Dies ist im o. g. Fall zweier Aufbauten, die in der ersten Position des integrierten Anhängers ineinander verschoben sind, am Einfachsten dadurch zu erreichen, dass die Aufbauten des Zugfahrzeug und des integrierten Anhängers in der zweiten Position des integrierten Anhängers in Längsrichtung des Zugfahrzeugs voneinander beabstandet sind.

Auch ist es denkbar, einen geschlossenen Aufbau des Zugfahrzeugs mit einem geschlossenen Aufbau des integrierten Anhängers durch ein flexibles Verbindungsstück so miteinander zu verbinden, dass beide Aufbauten einen gemeinsamen, nach außen geschlossenen und durchgängigen Laderaum umfassen. Dieses flexible Verbindungsstück erlaubt in der zweiten Position des integrierten Anhängers trotz durchgängigen Laderaums ein Verschwenken desselben um die bewegliche Drehkranzverbindung.

Die Flexibilität hinsichtlich des Transports unterschiedlicher Frachtgüter lässt sich noch weiter dadurch erhöhen, dass der Aufbau des Zugfahrzeug abnehmbar ist. Dies ermöglicht ein Transportfahrzeug, das in seiner Grundkonfiguration, d.h. mit dem integrierten Anhänger in der ersten Position, lediglich einen Aufbau für den integrierten Anhänger vorsieht und somit einfach sowie kostengünstig herzustellen ist. Ist der integrierte Anhänger aus der ersten Position in Längsrichtung des Zugfahrzeugs nach hinten verschoben und in einer Zwischenposition oder der zweiten Position arretiert worden, so bietet der freigewordene Abschnitt über dem Fahrzeugrahmen Platz, einen Aufbau auf diesem zu montieren. Dadurch kann das Transportfahrzeug je nach Bedarf schnell und flexibel auch an die Erfordernisse einer Fracht mit höherem Gewicht bzw. größerem Umfang angepasst werden. Wiederum gilt, dass abhängig von den jeweiligen Erfordernissen, die sich aus der Beschaffenheit der zu transportierenden Güter ergeben, ein offener oder ein geschlossener Aufbau vorteilhafter sein kann. Um ein Verschwenken des integrierten Anhängers um die bewegliche Drehkranzverbindung zu ermöglichen, müssen beide Aufbauten in der zweiten Position des integrierten Anhängers in Längsrichtung des Zugfahrzeugs voneinander beabstandet sein.

Weitere Vorteile, Merkmale und Anwendungsmöglichkeiten werden deutlich anhand folgender Beschreibung dreier beispielhafter Ausführungsformen und der dazugehörigen Figuren. Es zeigen:
- Figur 1a: eine erste Ausführungsform des Transportfahrzeugs mit einem geschlossenen Aufbau 11 des integrierten Anhängers 2 in der ersten Position,
- Figur 1b: die erste Ausführungsform des Transportfahrzeugs mit einem geschlossenen Aufbau 11 des integrierten Anhängers 2 in der zweiten Position,
- Figur 2a: eine zweite Ausführungsform des Transportfahrzeugs, in der der geschlossene Aufbau 12 des Zugfahrzeugs 1 den geschlossenen Aufbau 11' des integrierten Anhängers 2 in der ersten Position teilweise umgreift,
- Figur 2b: die zweite Ausführungsform des Transportfahrzeugs, in der die geschlossenen Aufbauten 11' bzw. 12 des Zugfahrzeugs 1 bzw. des integrierten Anhängers 2 in der zweiten Position voneinander beanstandet sind,
- Figur 2c: eine schematische Ansicht von oben der zweiten Ausführungsform aus Figur 2a mit dem integrierten Anhänger 2 in der ersten Position,
- Figur 3a: eine dritte Ausführungsform mit einem abnehmbaren geschlossenen Aufbau 12' des Zugfahrzeugs 1 und einem geschlossenen Aufbau 11" des integrierten Anhängers 2 in der zweiten Position,
- Figur 3b: eine schematische Ansicht von oben der dritten Ausführungsform aus Figur 3a.

Es versteht sich, dass sowohl die vorstehende allgemeine Beschreibung, als auch die folgende genaue Beschreibung lediglich beispielhaft und erläuternd sind und eine zusätzliche Erläuterung der beanspruchten Erfindung bereitstellen soll.

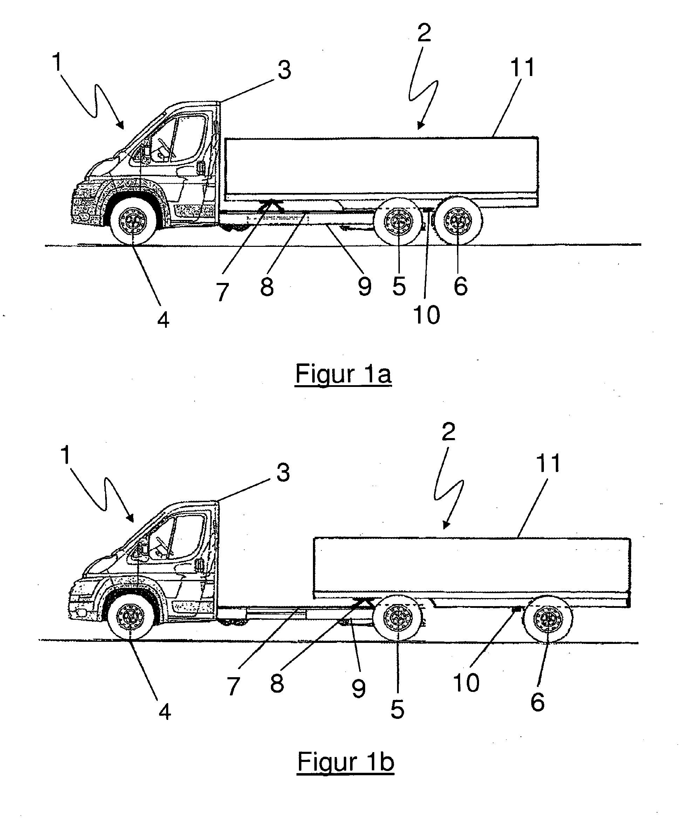

In Figur 1a ist eine erste Ausführungsform des Transportfahrzeugs dargestellt, die aus einem Zugfahrzeug 1 und einem integrierten Anhänger 2 in Form eines Aufliegers besteht. Das Zugfahrzeug 1 umfasst neben einer Fahrerkabine 3 zwei Achsen 4, 5 sowie einen Fahrzeugrahmen 9 mit einer Führungsschiene 8. Der integrierte Anhänger 2 umfasst einen geschlossenen Aufbau 11 und eine Achse 6. Der integrierte Anhänger 2 ist über eine bewegliche Drehkranzverbindung 7 mit dem Zugfahrzeug 10 verbunden. Die bewegliche Drehkranzverbindung 7 und mit ihr der integrierte Anhänger 2 ist auf der Führungsschiene 8 in Längsrichtung des Transportfahrzeugs verschiebbar. In der in Figur 1 a abgebildeten ersten Position des integrierten Anhängers 2 befindet sich der Aufbau 11 des integrierten Anhängers 2 zu einem überwiegenden Teil über dem Fahrzeugrahmen 9 des Zugfahrzeugs 1. Ebenso weist das Transportfahrzeug eine lösbare Verriegelung 10 zwischen Zugfahrzeug 1 und integriertem Anhänger 2 auf. Diese hält den integrierten Anhänger 2 in der ersten Position, wenn sie verriegelt ist. Des weiteren verhindert sie, dass der integrierte Anhänger 2 um die bewegliche Drehkranzverbindung 7 verschwenk werden oder in Längsrichtung des Zugfahrzeugs 1 verschoben werden kann. Soll die bewegliche Drehkranzverbindung 7 und mit ihr der integrierte Anhänger 2 bei Bedarf entlang der Längsrichtung des Zugfahrzeugs 1 verschoben werden, so muss hierfür die lösbare Verriegelung entriegelt werden. Figur 1b zeigt den integrierten Anhänger 2 in der zweiten Position, in der sich der integrierte Anhänger zu einem überwiegenden Teil nicht über dem Fahrzeugrahmen 9 des Zugfahrzeugs 1 befindet. In dieser zweiten Position ist die bewegliche Drehkranzverbindung 7 auf der Führungsschiene 8 so arretiert, dass ein Verschieben des integrierten Anhängers 2 in Längsrichtung des Zugfahrzeugs 1 verhindert wird.

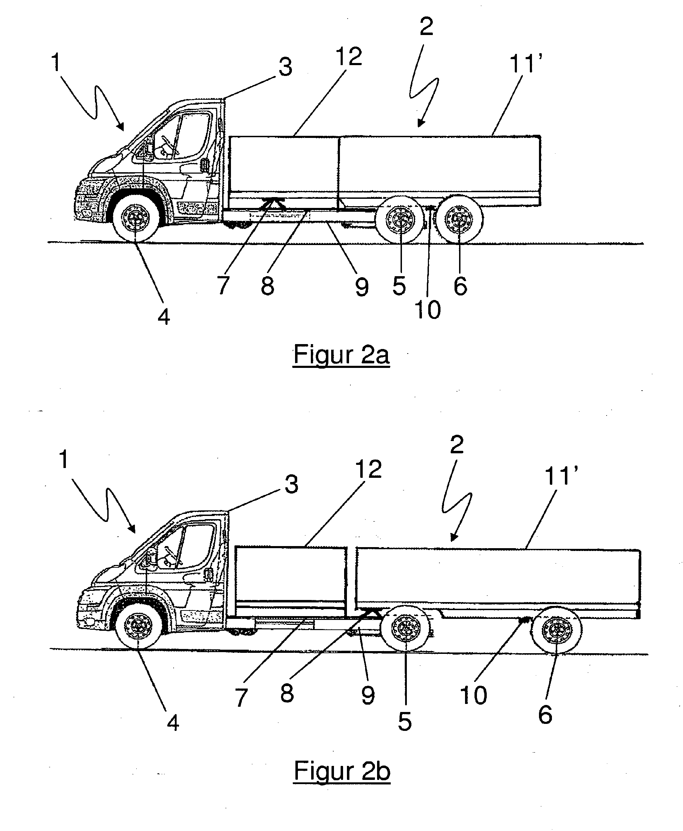

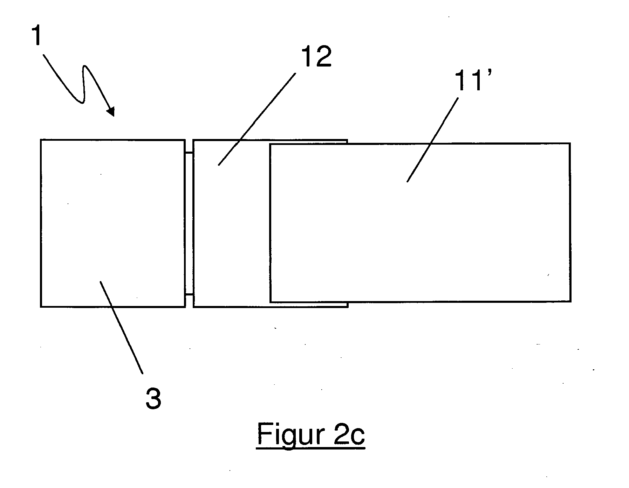

In Figur 2a ist eine zweite Ausführungsform des Transportfahrzeugs zu sehen, die sowohl einen Aufbau 12 für das Zugfahrzeug 1 als auch einen Aufbau 11' für den integrierten Anhänger 2 vorsieht. In dieser Ausführungsform ist es möglich durch ein Verschieben des integrierten Anhängers 2 den durch die beiden Aufbauten 11', 12 umschlossenen Laderaum zu vergrößern. Aus diesem Grund ist keine Trennwand oder Vergleichbares zwischen den beiden Aufbauten 11', 12 vorgesehen. Vielmehr bilden die beiden Innenräume der Aufbauten 11', 12 einen gemeinsamen, durchgängigen Laderaum. Dabei umfasst das Zugfahrzeug 1 eine Fahrerkabine 3, zwei Achsen 4, 5, sowie einen Fahrzeugrahmen 9 mit einer Führungsschiene 8. Der integrierte Anhänger 2 in Form eines Aufliegers umfasst seinerseits einen geschlossenen Aufbau 11' sowie eine Achse 6. Auf dem Fahrzeugrahmen 9 des Zugfahrzeugs 1 ist ein geschlossener Aufbau 12 montiert, der in der ersten Position des integrierten Anhängers 2 den geschlossenen Aufbau 11' desselben teilweise umgreift. In dieser ersten Position des integrierten Anhängers 2, ist dieser zusätzlich über eine lösbare Verriegelung 10 mit dem Zugfahrzeug 1 verbunden. Diese lösbare Verriegelung 10 verhindert in verriegeltem Zustand ein Verschwenken des integrierten Anhängers 2 um die bewegliche Drehkranzverbindung 7 sowie ein Verschieben desselben in Längsrichtung des Zugfahrzeugs 1. Ist der integrierte Anhänger 2 in die zweite Position verschoben wie in Figur 2b gezeigt, so vergrößert sich der zur Verfügung stehende Laderaum um das Volumen des in der ersten Position vom Aufbau 12 des Zugfahrzeugs 1 umfassten Teils des Aufbaus 11' des integrierten Anhängers 2. Damit der integrierte Anhänger 2 in der zweiten Position 2 um die bewegliche Drehkranzverbindung 7 schwenkbar ist, sind die Aufbauten 12, 11' in Längsrichtung des Zugfahrzeugs voneinander beabstandet. Anhand der in Figur 2c gezeigten Grundrissansicht dieser zweiten Ausführungsform des Transportfahrzeugs, wird ersichtlich wie die Aufbauten 11', 12 von Zugfahrzeug 1 und integriertem Anhänger 2 in der ersten Position des integrierten Anhängers 2 ineinander verschoben sind.

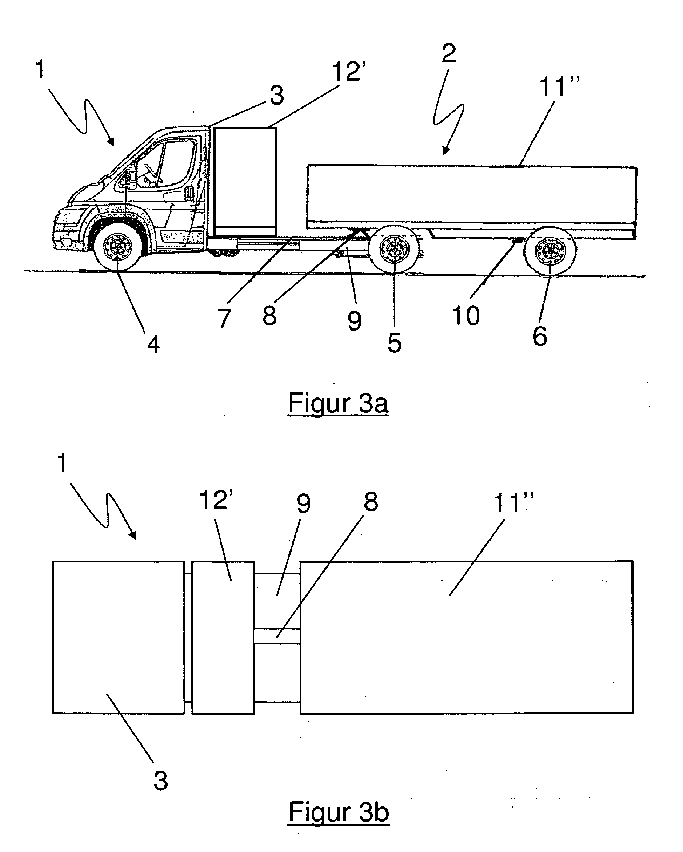

In Figur 3a ist eine dritte Ausführungsform des Transportfahrzeugs zu sehen, bei der das Zugfahrzeug 1, bestehend aus einer Fahrerkabine 3, zwei Achsen 4, 5 sowie einem Fahrzeugrahmen 9, die Möglichkeit bietet, einen abnehmbaren geschlossen Aufbau 12' auf dem Fahrzeugrahmen 9 zu befestigen. Hierzu muss der integrierte Anhänger 2 in Form eines Aufliegers bestehend aus einem geschlossenen Aufbau 11" und einer Achse 6 aus seiner ersten Position entlang der Längsrichtung des Zugfahrzeugs 1 in seine zweite Position verschoben sein. In dieser zweiten Position wird die bewegliche Drehkranzverbindung 7 auf der Führungsschiene 8 arretiert, so dass auf dem Fahrzeugrahmen 9 des Zugfahrzeugs 1 genügend Platz für den Aufbau 12' vorhanden ist. Figur 3b zeigt die Anordnung des Aufbaus 12' des Zugfahrzeugs 1 hinter der Fahrerkabine 3 und vor dem Aufbau 11" des integrierten Anhängers 2. Auch in dieser Ausführungsform sind die beiden Aufbauten 12', 11" in Längsrichtung des Zugfahrzeugs 1 voneinander beabstandet, so dass der integrierte Anhänger 2 um die bewegliche Drehkranzverbindung 7 verschwenkbar ist. Vorteilhaft ist es, wenn der Aufbau 12' des Zugfahrzeugs 1 seitlich zu öffnen ist, da dies auch in montiertem Zustand ein leichtes Be- und Entladen desselben ermöglicht.

Denkbar sind in den o. g. beispielhaften Ausführungsformen auch Kombinationen zwischen offenen und geschlossenen Aufbauten 11, 11', 11 ", 12, 12', die je nach Anforderung der zu transportierenden Güter die Vorteile beider Ausführungsmöglichkeiten miteinander verbinden.

Für Zwecke der ursprünglichen Offenbarung wird darauf hingewiesen, dass sämtliche Merkmale, wie sie sich aus der vorliegenden Beschreibung, den Zeichnungen und den abhängigen Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen und die Betonung der Unabhängigkeit der einzelnen Merkmale voneinander wird hier nur der Kürze und der Lesbarkeit der Beschreibung wegen verzichtet.

### Bezugszeichenliste

- 1: Zugfahrzeug
- 2: Integrierter Anhänger
- 3: Fahrerkabine
- 4: Vorderachse des Zugfahrzeugs
- 5: Hinterachse des Zugfahrzeugs
- 6: Achse des integrierten Anhängers
- 7: Bewegliche Drehkranzverbindung
- 8: Führungsschiene
- 9: Fahrzeugrahmen
- 10: Lösbare Verriegelung
- 11: Aufbau des integrierten Anhängers
- 11': Aufbau des integrierten Anhängers
- 11": Aufbau des integrierten Anhängers
- 12: Aufbau des Zugfahrzeugs
- 12': Aufbau des Zugfahrzeugs

## Patentansprüche

1. Transportfahrzeug, welches ein Zugfahrzeug (1), das einen Fahrzeugrahmen (9) und mindestens zwei Achsen (4, 5) umfasst, und einen integrierten Anhänger (2), der einen offenen oder geschlossenen Aufbau (11, 11', 11") und wenigstens eine Achse (6) umfasst, aufweist, **dadurch gekennzeichnet, dass** der integrierte Anhänger (2) über eine bewegliche Drehkranzverbindung (7) mit dem Zugfahrzeug (1) verbunden ist, wobei die bewegliche Drehkranzverbindung (7) zusammen mit dem integrierten Anhänger (2) aus einer ersten Position, in der sich der Aufbau (11, 11', 11") des integrierten Anhängers (2) zu einem überwiegenden Teil über dem Fahrzeugrahmen (9) befindet und der integrierte Anhänger (2) über eine lösbare Verriegelung (10) in dieser ersten Position verriegelt gehalten wird, so dass der integrierte Anhänger (2) an einem Verschwenken um die bewegliche Drehkranzverbindung (7) ebenso wie an einem Verschieben in Längsrichtung des Zugfahrzeugs (1) gehindert wird, in eine zweite Position, in der sich der Aufbau (11, 11', 11 ") des integrierten Anhängers (2) zu einem überwiegenden Teil nicht über dem Fahrzeugrahmen (9) befindet und die lösbare Verriegelung (10) entriegelt ist, so dass der integrierte Anhänger (2) um die bewegliche Drehkranzverbindung (7) verschwenkbar ist, auf dem Zugfahrzeug (1) in dessen Längsrichtung verschiebbar ist.

2. Transportfahrzeug nach Anspruch 1, **dadurch gekennzeichnet, dass** die bewegliche Drehkranzverbindung (7) in der zweiten Position des integrierten Anhängers (2) so arretierbar ist, dass der integrierte Anhänger (2) an einem Verschieben in Längsrichtung des Zugfahrzeugs (1) gehindert wird.

3. Transportfahrzeug nach einem der Ansprüche 1 oder 2, **dadurch gekennzeichnet, dass** die bewegliche Drehkranzverbindung (7) zusammen mit dem integrierten Anhänger (2) an dem Zugfahrzeug (1) in dessen Längsrichtung stufenweise in Zwischenpositionen zwischen der ersten und der zweiten Position verschiebbar ist, wobei der integrierte Anhänger (2) in diesen Zwischenpositionen jeweils über eine zugehörige lösbare Verriegelung verriegelt gehalten wird, so dass der integrierte Anhänger (2) an einem Verschwenken um die bewegliche Drehkranzverbindung (7) ebenso wie an einem Verschieben in Längsrichtung des Zugfahrzeugs (1) gehindert wird.

4. Transportfahrzeug nach einem der Ansprüche 1 bis 3, **dadurch gekennzeichnet, dass** auf dem Zugfahrzeug (1) ein offener oder geschlossener Aufbau (12, 12') vorgesehen ist, der fest montierbar oder abnehmbar ist.

5. Transportfahrzeug nach Anspruch 4, **dadurch gekennzeichnet, dass** die Ladefläche des Aufbaus (12) des Zugfahrzeugs (1) mit der Ladefläche des Aufbaus (11') des integrierten Anhängers (2) eine durchgängige Ladefläche bildet.

6. Transportfahrzeug nach einem der Ansprüche 4 oder 5, **dadurch gekennzeichnet, dass** der Aufbau (12, 12') des Zugfahrzeugs (1) und der Aufbau (11', 11") des integrierten Anhängers (2) in der zweiten Position des integrierten Anhängers (2) in Längsrichtung des Zugfahrzeugs (1) voneinander beabstandet sind.

## Claims

1. A transport vehicle, which has a tractive vehicle (1), which comprises a vehicle frame (9) and at least two axels (4, 5), and an integrated trailer (2), which comprises an open or closed body (11, 11,' 11") and at least one axle (6), **characterized in that** the integrated trailer (2) is connected to the tractive vehicle (1) via a moveable live ring connection (7), wherein the moveable live ring connection (7) is kept locked together with the integrated trailer (2) from a first position in which the body (11, 11', 11 ") of the integrated trailer (2) is located for the most part over the vehicle frame (9) and the integrated trailer (2) is kept locked in this first position via a releasable lock (10), such that the integrated trailer (2) is prevented from pivoting about the moveable live ring connection (7) as well as from shifting in the longitudinal direction of the tractive vehicle (1), into a second position, in which the body (11, 11', 11 ") of the integrated trailer (2) is for the most part not located over the vehicle frame (9) and the releasable lock (10) is released, such that the integrated trailer (2) can be pivoted about the moveable live ring connection (7), can be shifted on the tractive vehicle (1) in its longitudinal direction.

2. A transport vehicle according to claim 1, **characterized in that** the moveable live ring connection (7) is lockable in the second position of the integrated trailer (2) such that the integrated trailer (2) is prevented from a shifting in the longitudinal direction of the tractive vehicle (1).

3. A transport vehicle according to one of claims 1 or 2, **characterized in that** the moveable live ring connection (7) can be gradually shifted together with the integrated trailer (2) on the tractive vehicle (1) in its longitudinal direction into intermediate positions between the first and the second position, wherein the integrated trailer (2) is kept locked in the intermediate positions in each case via an associated releasable lock, such that the integrated trailer (2) is prevented from pivoting about the moveable live ring connection (7) as well as from shifting in the longitudinal direction of the tractive vehicle (1).

4. A transport vehicle according to one of claims 1 to 3, **characterized in that** on the tractive vehicle (1) an open or closed body (12, 12') is provided, which can be firmly installed or removed.

5. A transport vehicle according to claim 4, **characterized in that** the loading area of the body (12) of the tractive vehicle (1) forms a continuous loading area with the loading area of the body (11') of the integrated trailer (2).

6. A transport vehicle according to one of claims 4 or 5, **characterized in that** the body (12, 12') of the tractive vehicle (1) and the body (11', 11") of the integrated trailer (2) are spaced apart from each other in the second position of the integrated trailer (2) in the longitudinal direction of the tractive vehicle (1).

## Revendications

1. Véhicule de transport, comportant un véhicule de traction (1), qui comporte un châssis de véhicule (9) et au moins deux essieux (4, 5), et une remorque (2) intégrée, qui comporte une structure carrossée (11, 11', 11") ouverte ou fermée et au moins un essieu (6), **caractérisé en ce que** la remorque (2) intégrée est assemblée au véhicule de traction (1) par l'intermédiaire d'un assemblage mobile à couronne pivotante (7), ledit assemblage mobile à couronne pivotante (7), conjointement avec la remorque (2) intégrée, pouvant être déplacé sur le véhicule de traction (1) dans le sens longitudinal de celui-ci hors d'une première position, dans laquelle la structure carrossée (11, 11', 11") de la remorque (2) intégrée se situe en majeure partie au-dessus du châssis de véhicule (9) et la remorque (2) intégrée est maintenue verrouillée dans cette première position par l'intermédiaire d'un verrouillage (10) amovible, de telle sorte que la remorque (2) intégrée est empêchée de pivoter autour de l'assemblage mobile à couronne pivotante (7) et de se déplacer dans le sens longitudinal du véhicule de traction (1), vers une deuxième position, dans laquelle la structure carrossée (11, 11', 11") de la remorque (2) intégrée ne se situe pas en majeure partie au-dessus du châssis de véhicule (9) et le verrouillage (10) amovible est déverrouillé, de telle sorte que la remorque (2) intégrée peut pivoter autour de l'assemblage mobile à couronne pivotante (7).

2. Véhicule de transport selon la revendication 1, **caractérisé en ce que** l'assemblage mobile à couronne pivotante (7) peut être immobilisé dans la deuxième position de la remorque (2) intégrée, de telle sorte que ladite remorque (2) intégrée est empêchée de se déplacer dans le sens longitudinal du véhicule de traction (1).

3. Véhicule de transport selon la revendication 1 ou 2, **caractérisé en ce que** l'assemblage mobile à couronne pivotante (7), conjointement avec la remorque (2) intégrée, peut être déplacé sur le véhicule de traction (1) dans le sens longitudinal de celui-ci par paliers dans des positions intermédiaires entre la première et la deuxième position, la remorque (2) intégrée étant maintenue verrouillée par un verrouillage amovible correspondant dans chacune de ces positions intermédiaires, de telle sorte que la remorque (2) intégrée est empêchée de pivoter autour de l'assemblage mobile à couronne pivotante (7) et de se déplacer dans le sens longitudinal du véhicule de traction (1).

4. Véhicule de transport selon l'une quelconque des revendications 1 à 3, **caractérisé en ce que** sur le véhicule de traction (1) est prévue une structure carrossée (12, 12') ouverte ou fermée, qui peut être montée de manière fixe ou de manière amovible.

5. Véhicule de transport selon la revendication 4, **caractérisé en ce que** la surface de chargement de la structure carrossée (12) du véhicule de traction (1) forme une surface de chargement continue avec la surface de chargement de la structure carrossée (11') de la remorque (2) intégrée.

6. Véhicule de transport selon la revendication 4 ou 5, **caractérisé en ce que**, dans la deuxième position de la remorque (2) intégrée, la structure carrossée (12, 12') du véhicule de traction (1) et la structure carrossée (11', 11") de la remorque (2) intégrée sont situées à distance l'une de l'autre dans le sens longitudinal du véhicule de traction (1).
